# EUROPEAN PATENT APPLICATION

(11) **EP 2 159 804 A1**
(43) Date of publication of application: **03.03.2010**
(21) Application number: 09177300.2
(22) Date of filing: 28.07.2005
(51) Int. Cl.: H01B 1/04, H05K 7/20, B32B 9/00, C01B 31/02, C04B 35/52, H01M 4/96

(54) **Thermally improved conductive carbon sheet based on mixed carbon material of expanded graphite powder and carbon nano tube powder**

(30) Priority: 27.07.2005 KR 20050068557
(62) Divisional of application: 05774235.5
(71) Applicant: Exaenc Corp., Guro-Gu Seoul 152-790 (KR)
(72) Inventor: Lee, Taek Soo, Cheonan-si Chungcheongnam-do (KR); Kang, Seung Kyung, Ansung-si Gyeonggi-do (KR); Kim, Myung Ho, Hwaseong-si Gyeonggi-do 445-010 (KR); Seo, Chang Woo, Gyeryong-si Chungcheongnam-do (KR); Kim. Kwan Young, Anyang-si Gyeonggi-do 430-710 (KR)
(74) Representative: Melin Granberg, Linda

(57) **Abstract**

Provided is a high thermal conductive carbon sheet made using mixed carbon of expanded graphite powder and carbon nanotube powder, which includes a unit carbon sheet layer molded by pressing expanded graphite powder and carbon nanotube powder mixed in a predetermined ratio, at a high temperature, and a synthetic resin layer formed on at least one surface of the unit carbon sheet layer to reinforce and electrically insulate the unit carbon sheet layer.

## Description

### Technical Field

The present invention is related to a high thermal conductive carbon sheet made using mixed carbon of expanded graphite powder and carbon nanotube (CNT) powder, and more particularly, to a high thermal conductive carbon sheet using mixed carbon of expanded graphite powder and carbon nanotube powder which has an improved thermal conductivity in the horizontal and vertical directions, relatively reinforced property, and improved tensile strength and tear strength.

### Background Art

Carbon sheets are used as heat sinks for plasma display panels (PDPs), liquid crystal displays (LCDs), light-emitting diodes (LEDs). The carbon sheet is typically manufactured using expanded graphite powder, of which a method is briefly described below.

A predetermined press mold is filled with coated expanded graphite powder. The expanded graphite powder is pressed and molded with an appropriate molding pressure using a press so that a first product is produced. Then, the first product is rolling-processed as necessary to have an appropriate target thickness so that a second product is produced. The second product is cut and bent to manufacture a final carbon sheet.

However, when the carbon sheet is manufactured in the above method, the strength of the carbon sheet is weak. Thus, when a pressure is applied beyond a predetermined value, the carbon sheet is plastically deformed and a difference in the thermal conductivity in the horizontal and vertical directions is further increased. Moreover, since the conventional carbon sheets are all imported, the carbon sheets are costly.

To overcome the above problem, the present applicant filed a patent application regarding the high thermal conductive carbon sheet (Korean Patent Application No. 10-2004-0023235). This technology is related to the manufacture of a high thermal conductive carbon sheet by mixing expanded graphite and cabon nanotube so that strength is enhanced compared to the conventional technology and the thermal conductivity in the horizontal and vertical directions is improved. Nevertheless, the carbon sheet manufactured in the above method has drawbacks in that a sufficient property is not obtained and the tensile strength and the tear strength are not sufficient.

### Disclosure of Invention

### Technical Solution

To solve the above and/or other problems, the present invention provides a high thermal conductive carbon sheet made using mixed carbon of expanded graphite powder and carbon nanotube powder which has an improved thermal conductivity in the horizontal and vertical directions, relatively reinforced property, and improved tensile strength and tear strength.

According to an aspect of the present invention, a high thermal conductive carbon sheet using mixed carbon of expanded graphite powder and carbon nanotube powder comprises a unit carbon sheet layer molded by pressing expanded graphite powder and carbon nanotube powder mixed in a predetermined ratio, at a high temperature, and a synthetic resin layer formed on at least one surface of the unit carbon sheet layer to reinforce and electrically insulate the unit carbon sheet layer.

A molding temperature of the unit carbon sheet layer is between 400-1,000 °C and a molding pressure of the unit carbon sheet layer is between 150-800 Kgf/cm².

The synthetic resin layer is formed by coating one of epoxy and urethane in a liquid state and drying and curing the coated material.

The synthetic resin layer is a heat-resistant film layer that is formed of one of poly ethylene terephthalate (PET), amide, and poly ethylene naphthalate (PEN) and attached to a surface of the unit carbon sheet layer.

A carbon nanotube coating layer is further formed on at least one surface of the unit carbon sheet layer.

The thickness of the carbon nanotube coating layer is between 0.2-5 µm.

The carbon nanotube coating layer is formed one of a roll coating method and a knife coating method.

The high thermal conductive carbon sheet further comprises a cohesive layer coated on the outermost surface of at least one of the unit carbon sheet layer, the heat-resistant film layer, and the carbon nanotube coating layer, and a release paper detachably attached to the cohesive layer.

The high thermal conductive carbon sheet further comprises a metal plate that is coated on the outermost surface of at least one of the unit carbon sheet layer, the heat-resistant Film layer, and the carbon nanotube coating layer to improve a heat radiation property.

The expanded graphite powder of 99.5-50 wt% and the carbon nanotube powder of 0.5-50 wt% are mixed to be used as a raw material for the unit carbon sheet layer.

According to another aspect of the present invention, a high thermal conductive carbon sheet made using mixed carbon of expanded graphite powder and carbon nanotube powder comprises an expanded graphite sheet layer, a carbon nanotube coating layer coated on at least one surface of the expanded graphite sheet layer, and a synthetic resin layer formed on a surface of one of the expanded graphite sheet layer and the carbon nanotube coating layer.

The synthetic resin layer is formed by coating one of epoxy and urethane in a liquid state and drying and curing the coated material.

The synthetic resin layer is a heat-resistant film layer that is formed of one of poly ethylene terephthalate (PET), amide, and poly ethylene naphthalate (PEN) and attached to a surface of the carbon nanotube coating layer.

### Advantageous Effects

According to the present invention, the strength is improved, the thermal conductivity in the horizontal and vertical directions is improved, property is relatively reinforced, and tensile strength and tear strength are improved.

### Brief Description of the Drawings

FIG. 1 is a cross-sectional view of a high thermal conductive carbon sheet according to an embodiment of the present invention;

FIG. 2 is a perspective view of the high thermal conductive carbon sheet of FIG. 1;

FIG. 3 is a perspective view of the high thermal conductive carbon sheet of FIG. 2 to which heat pipes are applied;

FIG. 4 is a cross-sectional view of a high thermal conductive carbon sheet according to another embodiment of the present invention;

FIG. 5 is a cross-sectional view of a high thermal conductive carbon sheet according to yet another embodiment of the present invention;

FIG. 6 is a graph showing the relationship between the size of the carbon sheet of FIG. 5 and the change in the temperature of a source; and

FIG. 7 is a cross-sectional view of a high thermal conductive carbon sheet according to still yet another embodiment of the present invention.

### Best Mode for Carrying Out the Invention

The present invention will be described in detail with reference to the accompanying drawings. In the following description, the same reference numerals indicate the same constituent elements having the same functions.

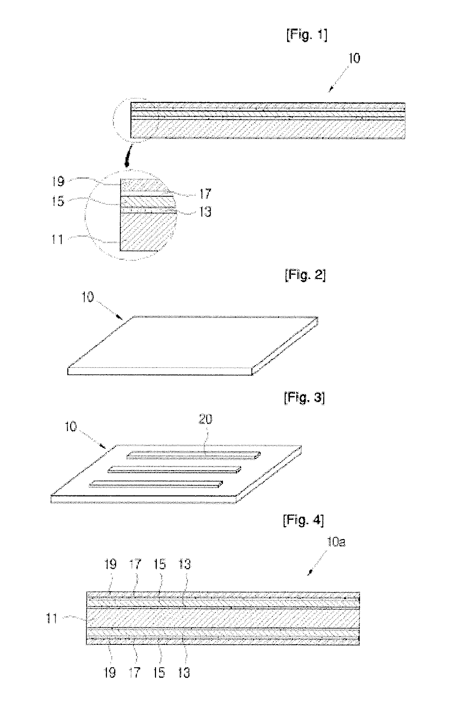

FIG. 1 is a cross-sectional view of a high thermal conductive carbon sheet according to an embodiment of the present invention. Referring to FIG. 1, a high thermal conductive carbon sheet according an embodiment of the present invention includes a unit carbon sheet layer 11, an adhesive layer 13, a synthetic resin layer (not shown), a cohesive layer 17, and a release paper 19.

The unit carbon sheet layer 11 is formed to have a predetermined thickness by mixing expanded graphite powder and carbon nanotube (CNT) powder in a predetermined ratio and pressing the mixture using a press at a high temperature. The expanded graphite powder of 99.5-50 wt% and the carbon nanotube powder of 0.5-50 wt% are mixed to be used as a raw material for the unit carbon sheet layer 11. During a press molding process, a molding temperature and a molding pressure are 400-1,000 °C and 150-800 Kgf/cm², respectively.

The expanded graphite powder used in the present embodiment can be obtained by processing graphite particles having a grapheme structure such as natural graphite, or kish graphite, as a material for the expanded graphite, using acid such as sulfuric acid, nitric acid, phosphoric acid, or perchloric acid and oxidizer such as chromic acid, permanganic acid, periodic acid, and hydrogen peroxide, to form an interlayer composition, and cleaning the interlayer composition and heating the same at a temperature of 400-1,000 °C. It has been reported that, when the expanded graphite obtained in the above process is heated, a interlayer distance that is perpendicular to a layer plane expands over 80 times to about 200-800 times compared to the original graphite.

The carbon nanotube is an anisotrophic material having a diameter of several to several hundreds micrometers and a length of several to several hundreds micrometers. In a carbon nanotube, a carbon atom is combined to three other carbon atoms to form a hexagonal honeycomb pattern. When the honeycomb pattern is drawn on a plane paper and then the paper is rolled round, a nanotube structure is completed. That is, each nanotube has a shape of a hollow tube or cylinder. Since the diameter of the tube is very tiny to about 1 nanometer (one billionth meter), the tube is referred to as a nanotube. When a honeycomb pattern is drawn on paper and the paper is rolled round, a nanotube is completed. The carbon nanotube becomes an electrical conductor (armchair structure) like metal or a semiconductor (zigzag structure) according to the angle at which the paper is rolled round.

Since the carbon nanotube has a high length/diameter ratio, the surface area per unit area is very large so that it has a physical strength equivalent to about 100 times greater than steel and a chemically stable property. In particular, the carbon nanotube has a thermal conductivity of 1,500-6,000 W/mk greater than that of diamond (33.3 W/cmK) that is known to be the highest thermal conductivity at the normal temperature in the world. Accordingly, the thermal conductivity of the carbon nanotube is several tens to several hundreds times greater than that of aluminum (0.243 W/cmK) or copper (4.01 W/cmK) that is generally used for a heat sink. The carbon nanotube used in the present embodiment includes single-wall nanotube (SWNT) and a multi-wall nanotube (MWNT).

Although the unit carbon sheet layer 11 has a greater strength and higher thermal conductivity in the horizontal and vertical directions, as described above, a sufficient property is not obtained and the tensile strength and tear strength are insufficient. In the present embodiment, the adhesive layer 13 is formed by coating an adhesive on a surface of the unit carbon sheet layer 11 manufactured as above and a synthetic resin layer is further formed on the adhesive layer 13.

The synthetic resin layer can be formed by coating either epoxy or urethane in a liquid state and drying and curing (curing after natural drying or heating drying) the coated material. In the present embodiment, however, a heat-resistant film layer 15 is provided as the synthetic resin layer and attached to the adhesive layer 13.

The heat-resistant film layer 1 reinforces and electrically insulates the unit carbon sheet layer 11. The heat-resistant film layer 15 can be formed of one of poly ethylene terephthalate (PET), amide, and poly ethylene naphthalate (PEN).

As the heat-resistant film layer 15 is attached to a surface of the unit carbon sheet layer 11, a carbon sheet having a relatively reinforced property and improved tensile strength and tear strength can be obtained. However, since the carbon sheet is mainly used as a heat sink of plasma display panels (PDPs), liquid crystal displays (LCDs), and tight-emitting diodes (LEDs), if it is easily attached to products or parts, the carbon sheet is used more conveniently. As shown in FIG. 1, a cohesive agent is pasted on the exposed surface of the heat-resistant film layer 15 and the release paper 19 is attached over the pasted cohesive agent. Thus, for use, the release paper 19 is detached and the carbon sheet is attached to a desired object or part using a cohesive force of the cohesive agent.

In the method of manufacturing the high thermal conductive carbon sheet 10 configured as above according to an embodiment of the present invention, first, the unit carbon sheet layer 11 is manufactured by mixing expanded graphite powder and carbon nanotube powder. That is, mixed carbon powder is produced by appropriately mixing expanded graphite powder and carbon nanotube powder and the mixed carbon powder is coated at a work position. The mixed carbon powder is molded at a high temperature using a press installed above the coated mixed carbon powder by generating a predetermined pressure between the press and a mold located under the mixed carbon powder so that a first carbon sheet layer (not shown) is produced. Here, a molding temperature is between 400-1,000 °C and a molding pressure is between 150-800 Kgf/cm².

Next, the mixed carbon powder is coated again on the upper surface of the first carbon sheet layer and the above press process is repeated. Then, a second carbon sheet layer (not shown) is deposited on the upper surface of the first carbon sheet layer with an increased thickness. When a target thickness is not obtained during the process of forming the second carbon sheet layer on the upper surface of the first carbon sheet layer, a third carbon sheet layer (not shown) is formed in the same manner until the desired thickness is obtained. Thus, the unit carbon sheet layer 11 having a desired target thickness as a whole is manufactured. When the target thickness is obtained with the second carbon sheet layer only, there is no need to form the third carbon sheet layer and the unit carbon sheet layer 11 can be obtained by completing a process after a rolling process.

For reference, the mixing ratio between the expanded graphite powder and carbon nanotube powder can be obtained from one of the following experiments. The following Table 1 shows the thermal conductivity in the horizontal and vertical directions after the unit carbon sheet layer 11 is manufactured by varying the mixing ratio between the expanded graphite powder and the carbon nanotube powder.

In Experiment 1, the unit carbon sheet layer 1 is formed by using expanded graphite powder of 99 wt% and carbon nanotube powder of 1 wt%. In Experiment 2, the unit carbon sheet layer 11 is formed by using expanded graphite powder of 95 wt% and carbon nanotube powder of 5 wt%. In Experiments 3 through 7, the unit carbon sheet layer 11 is formed by respectively using expanded graphite powder of 90 wt%, 85 wt%, 80 wt%, 75 wt%, or 70 wt% and carbon nanotube powder of 10 wt%, 15 wt%, 20 wt%, 25 wt%, or 30 wt%. The methods also guarantee the improved strength and thermal conductivity in the horizontal and vertical directions.

**Table 1**

| | | Exp. 1 | Exp. 2 | Exp. 3 | Exp. 4 | Exp. 5 | Exp. 6 | Exp. 7 |
|---|---|---|---|---|---|---|---|---|
| Thermal conductivity | Horizontal direction | 232 | 239 | 252 | 260 | 284 | 322 | 400 |
| (W/mk) | Vertical direction | 13 | 19 | 30 | 52 | 87 | 120 | 203 |

Next, an adhesive is pasted on the surface of the unit carbon sheet layer 11 to form the adhesive layer 13. The heat-resistant film layer 15 is attached to the adhesive layer 13 in a surface direction to be integrally with the unit carbon sheet layer 11. The cohesive layer 17 is formed on the exposed surface of the heat-resistant film layer 15 and the release paper 19 is attached to the cohesive layer 17 so that the high thermal conductive carbon sheet 10 according to an embodiment of the present invention can be manufactured.

When the carbon sheet 10 manufactured in the above method is used as a heat sink of plasma display panels (PDPs), liquid crystal displays (LCDs), and light-emitting diodes (LEDs), not only the strength and the thermal conductivity in the horizontal and vertical directions are improved but also property is relatively reinforced and the tensile strength and tear strength are improved.

FIG. 2 is a perspective view of the high thermal conductive carbon sheet of FIG. 1. FIG. 3 is a perspective view of the high thermal conductive carbon sheet of FIG. 2 to which heat pipes are applied. Table 2 shows the results of improvements of heat radiation properties the carbon sheet 10 of FIG. 2 and the carbon sheet 10 of FIG. 3 in which a heat pipe 20 is added to a surface thereof.

**Table 2**

| | Carbon sheet (FIG. 2) | Carbon sheet with heat pipe (FIG. 3) |
|---|---|---|
| Dimension height width, mm | 50-150 | 50-150 |
| Temparature when source temperature is 113.5°C | 90°C | 86°C |
| Temperature difference ΔT | 0°C | 4°C |

Referring to FIGS. 2 and 3, according to the results of Table 2, when the heat pipe 20 is applied to the carbon sheet 10 as shown in FIG. 3, a heat radiation effect is relatively improved. Here, the length of the heat pipe 20 is 100 mm.

FIG. 4 is a cross-sectional view of a high thermal conductive carbon sheet according to another embodiment of the present invention. In the previous embodiment, the adhesive layer 13, the heat-resistant film layer 15, the cohesive layer 17, and the release paper 19 are arranged in sequence from the surface of the unit carbon sheet layer 11. However, in a high thermal conductive carbon sheet 10a according to the present embodiment of FIG. 4, the adhesive layer 13; the heat-resistant film layer 15, the cohesive layer 17, and the release paper 19 are symmetrically arranged on both sides of the unit carbon sheet layer 11.

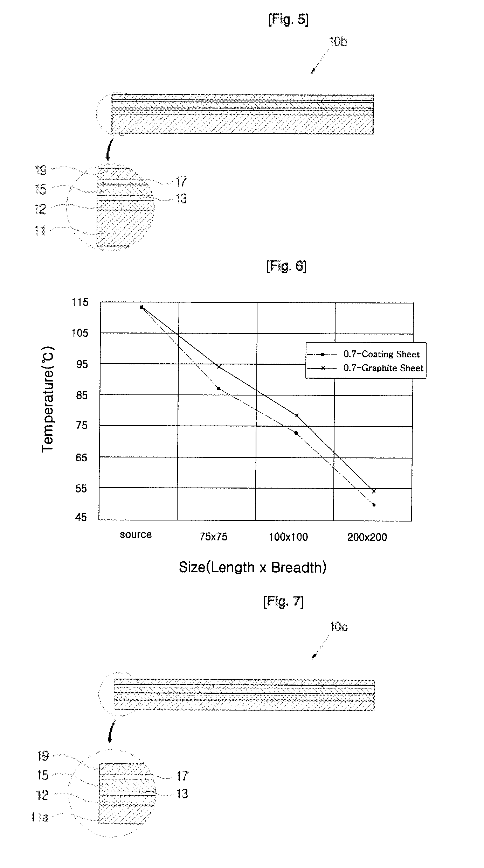

FIG. 5 is a cross-sectional view of a high thermal conductive carbon sheet according to yet another embodiment of the present invention. As shown in FIG. 5, a high thermal conductive carbon sheet 10b according to the present embodiment further includes carbon nanotube coating layer 12 on a surface of the unit carbon sheet layer 11. The carbon nanotube coating layer 12 is formed to have a thickness of 0.2-5 µm either in a roll coating method or in a knife coating method. For reference, in the roll coating method, carbon nanotube coating solution is coated on a surface of the unit carbon sheet layer 11. In the knife coating method, a certain amount of carbon nanotube coating solution is coated on a surface of the unit carbon sheet layer 11 and coated thereon to have an appropriate thickness using a knife.

When the carbon nanotube coating layer 12 is further formed as above, a higher heat radiation effect can be expected. For reference, FIG. 6 is a graph showing the relationship between the size of the carbon sheet of FIG. 5 and the change in the temperature of a source. As shown in FIG. 6, it can be seen that, under the same conditions, the thermal conductive carbon sheet 10b in which the carbon nanotube coating layer 12 is formed exhibits a higher heat radiation effect than the general graphite sheet. In the graph of FIG. 6, a line in the right indicates the general graphite sheet while a line in the left indicates the thermal conductive carbon sheet 10b. In addition, it can be seen that, as the area of the carbon sheet 10b in the present embodiment increases, the heat radiation effect increases accordingly.

FIG. 7 is a cross-sectional view of a high thermal conductive carbon sheet according to still yet another embodiment of the present invention. In all of the previous embodiments, the carbon sheets 10, 10a, and 10b are manufactured using the expanded graphite powder and the carbon nanotube powder. However, as shown in FIG. 7, a high thermal conductive carbon sheet 10c according to the present embodiment of the present invention is manufactured of an expanded graphite sheet later 11a, the carbon nanotube coating layer 12 coated on a surface of the expanded graphite sheet layer 11 a, and the heat-resistant film layer 15 formed on a surface of the carbon nanotube coating layer 12.

When the high thermal conductive carbon sheet 10c is manufactured as above, not only the strength and the thermal conductivity in the horizontal and vertical directions are improved but also property is relatively reinforced and the tensile strength and tear strength are improved. The other structure shown in FIG. 7 are the same as those described in the previous embodiments. For example, the adhesive layer 13 is formed between the carbon nanotube coating layer 12 and the heat-resistant film layer 15 and the release paper 19 is detachably attached to the cohesive layer 17 that is formed on the surface of the heat-resistant film layer 15,

Table 3 below shows the results of a change in the temperature of a source according to the size of the high thermal conductive carbon sheet 10b according to the still yet another embodiment shown in FIG. 7.

**Table 3**

| | Heat source temperature | 75 75 (mm) | 100 100 (mm) | 200 200 (mm) |
|---|---|---|---|---|
| Carbon nanotube coating layer | 113.5°C | 87.7°C | 72.9°C | 50.1°C |
| Expanded graphite sheet layer | 113.5°C | 943°C | 73°C | 54.5°C |
| Temperature difference (ΔT) | 0 | 4.4 | 5.1 | 6.6 |

According to Table 3, in the improvement of the heat radiation property by coating the carbon nanotube coating layer 12 on the surface of the expanded graphite sheet layer 11a having a thickness of 0.7 mm, when the carbon nanotube coating layer 12 is applied to the surface of the expanded graphite sheet layer 11a, the heat radiation effect is improved as the area decreases.

According to the embodiments of the present invention, the carbon sheets 10, 10a, 10b, and 10c are provided in which not only the strength and the thermal conductivity in the horizontal and vertical directions are improved but also property is relatively reinforced and the tensile strength and tear strength are improved.

While this invention has been particularly shown and described with reference to preferred embodiments thereof, it will be understood by those skilled in the art that various changes in form and details may be made therein without departing from the spirit and scope of the invention as defined by the appended claims.

Although a description is omitted in the previous embodiment, an additional metal plate can be integrally coupled to the above-described carbon sheet to be used as a heat sink. Presently, a heat radiation fan is used by being coupled to the carbon sheet. However, since a problem of noise or volume occurs in the heat radiation fan, an additional metal plate can be used instead of the heat radiation fan. For example, when a metal plate such as aluminum or copper is attached to the carbon sheet for use, a heat radiation property of the carbon sheet is added so that a superior heat radiation effected can be obtained.

### Industrial Applicability

As descried above, according to the present invention, not only the strength and the thermal conductivity in the horizontal and vertical directions are improved but also property is relatively reinforced and the tensile strength and tear strength are improved.

## Claims

1. A method of making a thermally conductive carbon sheet, the method comprising:
mixing expanded graphite powder and carbon nanotube powder together to form a mixture;
pressing the mixture at a temperature of between 400 °C and 1,000 °C to form a unit carbon sheet layer; and
forming a synthetic resin layer on at least one surface of the unit carbon sheet layer, thereby producing a thermally conductive carbon sheet.

2. The method of claim 1, wherein the pressing includes applying a pressure of between 150-180 Kgf/cm² to the mixture.

3. The method of claim 1, wherein the forming comprises:
coating liquid epoxy or liquid urethane on the at least one surface; and
curing the epoxy or urethane.

4. The method of claim 1, wherein the forming includes adhering a heat-resistant film layer to the at least one surface.

5. The method of claim 4, wherein the heat-resistant film layer is formed of polyethylene terepthalate (PET), amide, or polyethylenenapthalate (PEN).

6. The method of claim 4, further comprising:
coating a cohesive layer on an outermost surface of the heat-resistant film layer; and
attaching a release paper to the cohesive layer.

7. The method of claim 1, further comprising coupling a metal plate with the thermally conductive carbon sheet.

8. The method of claim 1, further comprising coating a carbon nanotube layer on a surface of the unit carbon sheet layer.

9. The method of claim 8, wherein the carbon nanotube layer is between 0.2 µm and 5 µm thick.

10. The method of claim 8, wherein the carbon nanotube layer is coated on using roll coating or knife coating.

11. The method of claim 1, further comprising:
applying a second mixture of expanded graphite powder and carbon nanotube powder to a surface of the unit carbon sheet layer; and
pressing the second mixture to increase a thickness of the thermally conductive carbon sheet.

12. The method of claim 11, further comprising repeating the steps of applying and pressing until a target thickness is obtained.

13. The method of claim 1, wherein the mixture is between 50-99.5% expanded graphite powder and between 0.5-50% carbon nanotube powder by weight.

14. A method of making a thermally conductive carbon sheet, comprising:
coating a carbon nanotube layer on a surface of an expanded graphite layer to form a unit carbon sheet layer; and
forming a synthetic resin on at least one surface of the unit carbon sheet layer, thereby making a thermally conductive carbon sheet.
